# FASCICULE DE BREVET EUROPEEN

(11) **EP 3 243 178 B1**
(45) Date de publication et mention de la délivrance du brevet: **28.04.2021**
(21) Numéro de dépôt: 16700257.5
(22) Date de dépôt: 08.01.2016
(51) Int. Cl.: H04W 12/08, H04W 12/12, G06Q 20/02, G06Q 20/40, H04L 29/06, G06Q 20/42, G06F 21/53

(54) **PROCÉDÉ DE TRAITEMENT D'UNE TRANSACTION À PARTIR D'UN TERMINAL DE COMMUNICATION**
VERFAHREN ZUR VERARBEITUNG EINER TRANSAKTION VON EINEM KOMMUNIKATIONSENDGERÄT
METHOD FOR PROCESSING A TRANSACTION FROM A COMMUNICATION TERMINAL

(30) Priorité: 09.01.2015 FR 1550192; 09.01.2015 FR 1550191; 09.01.2015 FR 1550193; 13.02.2015 FR 1551241
(43) Date de publication de la demande: 15.11.2017
(73) Titulaire: Ingenico Group, 75015 Paris (FR)
(72) Inventeur: QUENTIN, Pierre, 95880 Enghien-les-Bains (FR)
(74) Mandataire: Vidon Brevets & Stratégie
(86) Numéro de dépôt international: PCT/EP2016/050318
(87) Numéro de publication internationale: WO 2016/110590

(56) Documents cités:
- EP-A1- 2 746 981
- US-A1- 2011 078 081
- US-A1- 2014 317 686
- "EMV Mobile Contactless Payment: Technical Issues and Position Paper", INTERNET CITATION, 1 octobre 2007 (2007-10-01), pages 1-37, XP007908266, Extrait de l'Internet: URL:http://www.emvco.com/mobile.aspx [extrait le 2009-04-20]
- ANONYMOUS: "Runtime Environment Specification, Java Card Platform, Version 2.2.1", INTERNET CITATION, October 2003 (2003-10), XP002371505, Retrieved from the Internet: URL:http://java.sun.com/products/javacard/ specs.html [retrieved on 2006-03-10]

## Description

### 1. Domaine

La technique proposée se rapporte au traitement de transactions en ligne, et plus particulièrement au traitement de transactions à partir d'un terminal de communication, sous une forme sécurisée.

### 2. Art Antérieur

Deux modes de transactions coexistent lorsqu'un utilisateur souhaite effectuer une transaction de paiement à partir d'une carte bancaire :
- le mode « carte présente » : la carte bancaire est physiquement utilisée. Elle est par exemple insérée dans un terminal de paiement, et les informations qu'elle contient sont lues directement à partir de la puce ou de la bande magnétique intégrées à la carte. Alternativement, la carte bancaire est approchée d'un terminal de paiement, et les informations sont transmises via une technologie sans contact de type NFC (de l'anglais « Near Field Communication ») ;
- le mode « carte non présente »: la carte bancaire n'est pas utilisée physiquement, mais l'utilisateur saisit les informations présentes sur cette carte (numéro de carte, cryptogramme visuel, date d'expiration, nom du porteur) pour effectuer une transaction. C'est la solution aujourd'hui majoritairement utilisée pour le paiement en ligne sur Internet par exemple.

De nombreux fabricants de terminaux de communication mobiles (typiquement des smartphones ou des tablettes) cherchent aujourd'hui développer des solutions de paiement directement intégrées au terminal mobile, permettant à l'utilisateur de s'affranchir d'avoir à se munir de sa carte bancaire lorsqu'il souhaite effectuer une transaction.

Les solutions proposées actuellement à cette fin reposent essentiellement sur une mise en œuvre basée sur le mode de transaction de type « carte non présente » décrit précédemment : dans une première phase d'initialisation du service, l'utilisateur est invité à saisir, au sein d'une application dédiée installée sur son terminal de communication, les informations associées à sa ou ses cartes bancaires (par exemple le type de carte, le numéro de carte, le cryptogramme visuel, la date d'expiration, etc.). Ces informations sont alors enregistrées au sein même du terminal de communication. Cette phase d'initialisation terminée, l'utilisateur a alors la possibilité d'utiliser l'application dédiée pour effectuer certains paiements sans avoir à se munir de sa carte bancaire et devoir ressaisir manuellement les informations qui y sont indiquées : ces informations sont alors directement transmises par le terminal de communication au serveur de paiement.

Cette solution est néanmoins limitée. D'une part, les possibilités de transactions accessibles depuis un terminal de communication mobile sont limitées et ne concernent que les transactions en ligne reposant sur un mode « carte non présente », et la solution proposée vise alors essentiellement à éviter à l'utilisateur d'avoir à saisir lui-même les données associées à sa carte bancaire à chaque fois qu'il souhaite effectuer un paiement depuis un terminal de communication (saisie souvent fastidieuse). D'autre part cette solution soulève des problèmes de sécurité : toutes les données utiles pour réaliser une transaction étant stockées au sein même du terminal de communication, un utilisateur qui a égaré ou s'est fait subtiliser son dispositif mobile (son téléphone portable par exemple) n'est pas à l'abri qu'une personne malveillante qui a récupéré son bien accède à ces informations sensibles et réalise des transactions financières en son nom (si le terminal de communication ou l'application qui les contient sont insuffisamment sécurisés par exemple).

Ce problème de sécurisation qui se pose pour la réalisation de transactions de paiement à partir d'un terminal de communication est également rencontré dans la réalisation de transactions d'autres types : dès lors qu'une autorisation est requise pour la réalisation d'une transaction à partir d'un terminal de communication, il est risqué de stocker au sein de ce même terminal de communication les informations susceptibles de donner accès à une telle autorisation.

Il existe donc un besoin d'une solution permettant d'intégrer au sein d'un terminal de communication des moyens d'obtention d'une autorisation pour la réalisation de transactions, et qui ne présente pas au moins certains de ces problèmes de l'art antérieur.

### 3. Résumé

La technique proposée ne comprend pas ces inconvénients de l'art antérieur. Plus particulièrement, la technique proposée se rapporte à un Module de sécurisation (SE) intégré au sein d'un terminal de communication mobile.

Un tel module comprend :
au moins une première application de traitement de transaction comprenant au moins une interface de communication avec un réseau de communication de manière sécurisée, et
au moins une deuxième application de traitement de données sécurisées comprenant au moins une interface de communication avec un environnement d'exécution dudit terminal de communication,
ladite première application étant en mesure de requérir au moins une donnée auprès de ladite deuxième application.

Ainsi, un tel module permet à un terminal de communication d'offrir à la fois une fonctionnalité de traitement de transactions et des fonctionnalités « étendues » en adéquation avec les capacités de traitement de données du terminal de paiement. Par ailleurs, un tel module permet d'éviter une certification pour chaque typer de terminal au sein duquel il pourrait être inséré.

Selon une caractéristique particulière, ladite deuxième application comprend au moins un espace de stockage sécurisé.

Ainsi, la deuxième application est à même de gérer seule le stockage des données.

Selon une caractéristique particulière, ladite deuxième application comprend au moins une liste d'identifiants d'applications autorisées à accéder à ladite au moins une donnée.

Ainsi, l'application peut autoriser ou refuser l'accès aux données de manière contrôlée. De manière complémentaire, cette liste peut être prédéfinie et non modifiable afin de limiter les accès.

Selon une caractéristique particulière, ladite deuxième application comprend au moins une liste d'identifiants d'applications autorisées à requérir la mémorisation de données au sein dudit espace de stockage sécurisé.

Selon une caractéristique particulière, ladite au moins une donnée appartient au groupe comprenant :
- une donnée représentative d'une carte de paiement ;
- une donnée représentative d'une association entre un identifiant de marchand d'une part, et un identifiant d'un utilisateur auprès dudit marchand d'autre part;
- une donnée d'identification ou d'authentification biométrique.

Dans un autre mode de réalisation, il est également proposé un procédé de communication entre une première application de traitement de transactions et une deuxième application de traitement de données sécurisées, lesdites applications étant exécutées au sein d'un module de sécurisation d'un terminal de communication.

Un tel procédé comprend :
- une étape de réception, par ladite première application, d'une requête en provenance d'un réseau de communication ;
- une étape de transmission, par ladite première application, d'une requête d'obtention d'une donnée sécurisée, à destination de ladite deuxième application ;
- une étape d'obtention, par ladite deuxième application, de ladite donnée requise par la première application ;
- une étape de transmission, par ladite deuxième application, de ladite donnée requise, à destination de ladite première application ;
- une étape de transmission, par ladite première application, de ladite donnée requise à destination dudit réseau de communication.

Selon une caractéristique particulière,, préalablement à ladite étape d'obtention, par ladite deuxième application, de ladite donnée requise par la première application, une étape de vérification, par ladite deuxième application, que ladite première application est bien autorisée à accéder à ladite donnée requise.

Selon une caractéristique particulière, ladite étape d'obtention, par ladite deuxième application, de ladite donnée requise par la première application, comprend les sous-étapes suivantes :
- transmission d'une requête d'obtention de ladite donnée à destination d'un environnement d'exécution dudit terminal de communication ;
- réception de ladite donnée requise par la première application, en provenance dudit environnement d'exécution dudit terminal de communication.

Selon une implémentation préférée, les différentes étapes des procédés selon la technique proposée sont mises en œuvre par un ou plusieurs logiciels ou programmes d'ordinateur, comprenant des instructions logicielles destinées à être exécutées par un processeur de données d'un module relais selon la technique proposée et étant conçu pour commander l'exécution des différentes étapes des procédés.

En conséquence, la technique proposée vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

La technique proposée vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon la technique proposée peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, la technique proposée est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en œuvre une fonction ou un ensemble de fonctions, selon ce qui est décrit ci-dessous pour le module concerné. Un tel composant logiciel est exécuté par un processeur de données d'une entité physique (terminal, serveur, passerelle, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en œuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Chaque composante du système précédemment décrit met bien entendu en œuvre ses propres modules logiciels.

Les différents modes de réalisation mentionnés ci-dessus sont combinables entre eux pour la mise en œuvre de la technique proposée.

### 4. Figures

D'autres caractéristiques et avantages de la technique proposée apparaîtront plus clairement à la lecture de la description suivante d'un mode de réalisation préférentiel, donné à titre de simple exemple illustratif et non limitatif, et des dessins annexés, parmi lesquels :
- la figure 1 décrit une architecture simplifiée d'un terminal de communication apte à être utilisé dans le cadre de la mise en œuvre de la technique proposée, selon un mode de réalisation particulier ;
- la figure 2 illustre les étapes réalisées pour la mise en œuvre d'un procédé de communication entre une première application de traitement de transactions et une deuxième application de traitement de données sécurisées, dans un mode de réalisation particulier ;
- la figure 3 décrit une architecture simplifiée d'un module de sécurisation selon un mode de réalisation particulier de la technique proposée.

### 5. Description

### 5.1 Principe général

La technique proposée ne présente pas au moins certains de ces problèmes de l'art antérieur. En effet, il est proposé ici un procédé de traitement d'une transaction effectuée en ligne, qui repose sur l'utilisation d'un terminal de communication pour l'obtention d'une autorisation de réalisation de ladite transaction. Ce terminal de communication dispose de moyens matériels et logiciels permettant d'assurer une sécurisation accrue de la transaction. Il comprend en particulier un module de sécurisation, au sein duquel est exécutée une première application, en charge de traiter la transaction côté terminal. Selon la technique proposée, une deuxième application est également exécutée au sein de ce module de sécurisation. Le rôle de cette deuxième application est d'épauler la première application, en lui fournissant, à sa demande, des données nécessaires pour poursuivre ou enrichir la transaction en cours de traitement.

Dans la technique proposée, les mêmes mécanismes d'authentification que ceux mis en œuvre dans le cadre de la réalisation d'une transaction de paiement à partir d'une carte bancaire dans un mode « carte présente » sont mis en œuvre au sein du terminal de communication, dans le but d'obtenir une autorisation pour la réalisation d'une transaction à partir dudit terminal de communication. Un terminal de communication ne présente cependant pas les mêmes limitations qu'une carte à puce en termes de ressources (et notamment en termes de mémoire). Aussi, l'utilisation d'un terminal de communication permet de tirer avantageusement parti des ressources propres d'un tel dispositif pour contribuer à la mise en œuvre de la transaction. En particulier, le principe général de la technique proposée consiste à fournir à l'application de traitement de la transaction mis en œuvre au niveau du terminal de communication - qui est une application similaire à celle exécutée au sein d'une carte de paiement - des moyens permettant d'obtenir des informations complémentaires disponibles au sein du terminal de communication. Ces moyens prennent la forme d'une deuxième application, apte à communiquer avec ladite première application de traitement, pour lui fournir ces informations complémentaires, qui peuvent être ou bien des données nécessaires à la poursuite de la transaction (par exemple des données biométriques permettant de garantir une sécurisation accrue de la transaction), ou bien des données utiles pour la mise en œuvre de services complémentaires en lien avec la présente transaction (créditer des points de fidélité par exemple).

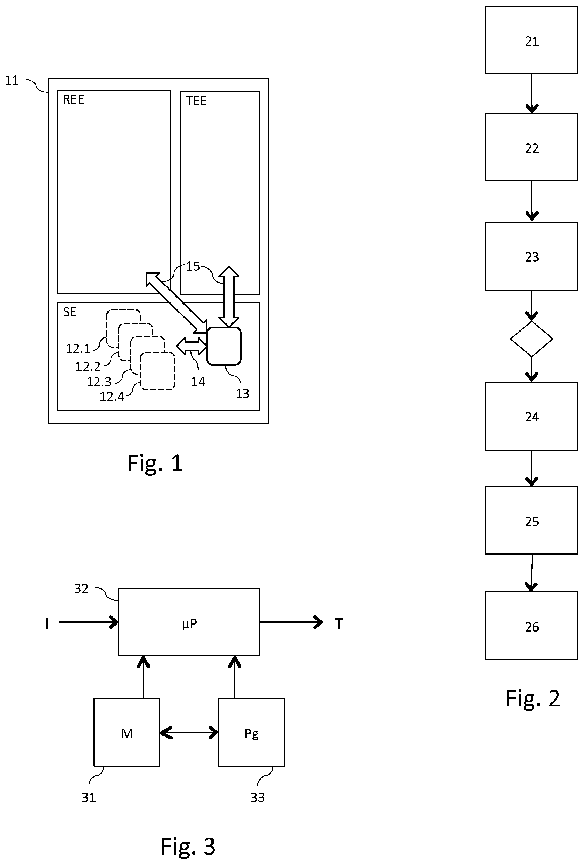

On présente, en relation avec la **figure 1****,** une architecture simplifiée d'un terminal de communication (11) apte à être utilisé dans le cadre de la mise en œuvre de la technique proposée, dans un mode de réalisation particulier. Un tel terminal de communication (11) comprend un processeur sécurisé ayant accès à une mémoire sécurisée. Ce processeur sécurisé et cette mémoire sécurisée sont éventuellement distincts du processeur central et de la mémoire centrale qui régissent le fonctionnement courant du terminal de communication (prise en charge d'appel, d'envoi de messages, navigation sur Internet, exécution d'application courantes, etc.), et qui mettent en œuvre un environnement d'exécution courant (REE, de l'anglais « Rich Execution Environment ») du système d'exploitation installé sur le terminal de communication. Ce processeur et cette mémoire sécurisés - qui forment donc un espace sécurisé au sein du terminal de communication - peuvent par exemple être intégrés au sein d'un environnement d'exécution sécurisé (TEE, de l'anglais « Trusted Execution Environment ») qui est livré au fabricant de terminaux de communication. Cet environnement d'exécution sécurisé (TEE) peut par ailleurs être complété d'un module de sécurisation (SE, de l'anglais « Secure Element ») dont la fonction dans la cadre de la présente technique est de dialoguer avec un terminal de paiement virtuel. Un module de sécurisation (SE) se présente sous la forme d'une plate-forme matérielle résistante aux attaques, au sein de laquelle peuvent être exécutées des applications sécurisées. Un tel module offre notamment un niveau de sécurisation supérieur à celui procuré par l'environnement d'exécution sécurisé (TEE), dans la mesure où il est conçu pour fournir une protection contre des attaques non seulement logicielles mais également matérielles (un environnement d'exécution sécurisé (TEE) étant conçu plus particulièrement pour offrir une protection contre des attaques logicielles, mais pas forcément contre des attaques matérielles). Plusieurs types de service (12) nécessitant l'obtention d'une autorisation pour la réalisation de transactions associées sont prédéfinis au sein de ce module de sécurisation (SE) (par exemple sous la forme d'applications spécifiques, également appelées applets). Afin de permettre à un utilisateur de pouvoir réaliser des transactions de paiement, le module de sécurisation (SE) intègre par exemple des types de services de paiement prédéfinis correspondant aux différents services de paiement les plus répandus. On peut citer à titre illustratif mais non limitatif les services de paiement Visa® et Mastercard®. D'autres types de services peuvent également être prédéfinis (La figure 1 présente à titre d'exemple un module de sécurisation (SE) au sein duquel sont prédéfinis quatre types de service 12.1 à 12.4, mais cet exemple est purement illustratif : un module de sécurisation selon la technique proposée intègre au moins un type de service). Chaque type de service prédéfini au sein d'un module de sécurisation est associé à un identifiant unique (PAN_S), construit sur le même format qu'un numéro de carte bancaire (ou PAN, de l'anglais « Primary Account Number »), c'est à dire selon la norme ISO/IEC 7812 (intitulée « Cartes d'identification - Identification des émetteurs »). Chacun de ces identifiants est non seulement unique au sein d'un même module de sécurisation, mais il est également unique au sein de l'ensemble des modules de sécurisation commercialisés. Ainsi, un tel module de sécurisation fourni à un fabricant de terminaux de communication contient, pour chaque type de service qui y est prédéfini, un identifiant qui fait office de signature unique et inaltérable et qui est construit sur le même format qu'un numéro de carte bancaire (quatre groupes de quatre chiffres). Au sein de ce module de sécurisation, chaque type de service est stocké sous la même forme que le sont les données contenues dans une carte à mémoire de type carte bancaire (un type de service se comportant alors vis-à-vis de l'extérieur, comme une carte bancaire virtuelle avec son propre numéro (PAN_S)).

Comme décrit précédemment, les différents types de services permettant la réalisation de transactions associées peuvent prendre la forme d'applications spécifiques également appelées applets qui sont exécutées au sein du module de sécurisation (SE) du terminal de communication. Aussi, les différents types de service 12.1 à 12.4 présentés sur la figure 1 peuvent être assimilés à autant d'applets de traitement de transactions (12), aptes à traiter des données sécurisées selon les mêmes mécanismes que ceux mis en œuvre dans le cadre de la réalisation d'une transaction de paiement à partir d'une carte bancaire dans un mode « carte présente », en lien avec un terminal de paiement. Afin de garantir une sécurisation maximale lorsqu'une transaction est en cours, l'applet associée qui est exécutée au sein du module de sécurisation (applet de traitement de la transaction (12)) n'a pas la possibilité d'échanger des informations avec des composants du terminal de communication qui se situeraient en dehors du module de sécurisation (SE). On garantit ainsi un fonctionnement identique à celui d'une carte bancaire (qui ne peut échanger d'information qu'avec un terminal de paiement durant une transaction). Néanmoins, il peut s'avérer nécessaire ou utile pour l'applet de traitement de la transaction (12), au cours du processus de réalisation d'une transaction, d'avoir accès à certaines informations présentes en dehors du module de sécurisation (SE) du terminal de communication. A titre d'exemple, si l'utilisateur qui souhaite réaliser une transaction de paiement a provisionné plusieurs cartes bancaires dans son terminal de communication, il est nécessaire que le module de sécurisation (SE) soit en mesure de sélectionner la carte de paiement que l'utilisateur souhaite utiliser. Les différentes représentations des cartes qu'un utilisateur a à sa disposition (par exemple des images, des photos ou encore les quatre derniers numéros des cartes en question) ne sont pas nécessairement stockées au sein du module de sécurisation (SE) du terminal de communication (dont la quantité de mémoire n'est pas aussi élevée). Aussi, l'applet de traitement de la transaction (12) doit avoir la possibilité d'accéder à des informations externes, par exemple des informations contenues dans l'environnement d'exécution courant (REE) ou dans l'environnement d'exécution sécurisé (TEE) du terminal de communication. Elle doit également avoir la possibilité d'accéder à des informations stockées au sein du module de sécurisation (SE) du terminal de communication, mais qu'elle ne contrôle pas directement.

Selon la technique proposée ici pour répondre à cette problématique, lorsqu'une transaction est en cours de traitement, une applet complémentaire (13) peut être exécutée au sein du module de sécurisation (SE), en parallèle de l'exécution de l'applet de traitement de la transaction (12). L'applet de traitement de la transaction (12) est en mesure de dialoguer (14) avec cette applet complémentaire (13), dans la mesure où toutes deux sont exécutées au sein du module de sécurisation (SE). En pratique, cet échange de données peut être réalisé au moyen d'interfaces logicielles dédiées. A titre d'illustration, un environnement d'exécution tel que celui proposé par Java Card®, couramment utilisé pour la mise en œuvre d'applications sur carte à puce, définit les modalités d'interaction entre les applets qui sont exécutées en son sein, et fourni notamment, sous l'appellation « Shareable interfaces », des moyens permettant l'échange de données inter applets. Dans cette solution, l'applet qui met des données à disposition au moyen d'une interface dédiée est en mesure d'autoriser ou non une autre applet à y accéder, sur la base d'un contrôle de son identifiant d'application (AID, de l'anglais « Application Identifier »). Les objets ainsi échangés entre l'applet de traitement de la transaction et l'applet complémentaire peuvent notamment prendre la forme de messages APDU (de l'anglais « Application Data Protocol Unit »), c'est à dire conformes au protocole de communication utilisé pour les échanges de données entre une carte à puce et un lecteur de carte à puce. L'applet complémentaire (13), qui n'est pas soumise aux mêmes contraintes de sécurisation et d'exécution temps-réel que l'applet de traitement des transactions, peut également échanger des données (15) avec des éléments du terminal de communication extérieurs au module de sécurisation, par exemple l'environnement d'exécution courant (REE) du terminal de communication ou encore l'environnement d'exécution sécurisé (TEE). Ainsi, l'applet complémentaire (13) est en mesure de récupérer toute donnée utile nécessaire à la poursuite d'une transaction, et de les communiquer à l'applet de traitement de la transaction (12). L'applet complémentaire (13) peut également jouer d'autres rôles, en plus de celui de faire le lien entre l'applet de réalisation de la transaction (12) et les éléments extérieurs au module de communication. Elle peut par exemple contenir des informations représentatives des cartes provisionnées pour un type de service donné (par exemple un index permettant de distinguer plusieurs cartes de même catégorie), ou encore des informations de sécurisation supplémentaires, telles que des données biométriques concernant l'utilisateur. A titre d'illustration, de nombreux terminaux de communication sont maintenant équipés de capteurs capables de détecter et d'analyser une empreinte digitale. Selon une utilisation possible de la technique proposée, l'utilisateur qui dispose d'un tel terminal de communication a la possibilité - par exemple au moment où il décide d'activer un des types de services prédéfinis dans son terminal de communication (dans une phase dite de provisionnement) - d'opter pour une sécurisation renforcée des transactions, basée sur la vérification d'une empreinte digitale. S'il choisit cette option, l'utilisateur est alors invité à suivre une procédure de capture d'une empreinte digitale de référence au moyen du capteur dédié. Cette opération permet de délivrer une signature caractéristique de cette empreinte de référence, signature qui est ensuite stockée au sein de l'applet complémentaire, ou ailleurs dans le terminal de communication, par exemple au sein de l'environnement d'exécution sécurisé (TEE). Lors de la mise en œuvre ultérieure d'une transaction, l'applet de traitement de la transaction peut alors solliciter l'applet complémentaire, qui se charge de récupérer ladite signature associée à l'empreinte digitale de référence. L'applet complémentaire dispose de moyens d'échanges d'informations avec les autres environnements d'exécution du terminal de communication, extérieurs au module de sécurisation (notamment l'environnement de fonctionnement courant (REE) et l'environnement d'exécution sécurisé (TEE)), lui permettant d'accéder à cette signature de l'empreinte de référence, même si celle-ci n'est pas stockée en son sein. Dans ce contexte, l'applet complémentaire est utilisée pour obtenir une donnée nécessaire pour évaluer si la transaction peut être autorisée ou non : lorsqu'un utilisateur souhaite effectuer une transaction, il doit fournir, au moyen du capteur d'empreinte digitale de son terminal de communication, une empreinte courante également caractérisée par une signature. La signature associée à l'empreinte de référence et la signature associée à l'empreinte courante sont alors transmises, sous une forme chiffrée, à au serveur de traitement de transactions qui se charge de les comparer. Ce mécanisme de sécurisation peut avantageusement remplacer ou venir compléter une saisie, par l'utilisateur, d'un numéro d'identification personnel (également appelé code PIN, de l'anglais « Personal Identification Number »)).

Dans un autre cas d'utilisation, l'applet complémentaire est utilisée pour obtenir des données relatives à la mise en œuvre d'un programme de fidélité (couramment appelé « fidelity program ») proposé par un site marchand, au moment où une transaction de paiement est réalisée auprès de ce site marchand. Par exemple, l'applet complémentaire est utilisée pour obtenir l'identifiant d'un utilisateur (usrld) auprès du site marchand, en fonction d'un identifiant dudit marchand (retld). Une association entre l'identifiant de marchand (retld) et l'identifiant de l'utilisateur (usrld) auprès de ce marchand a préalablement été stockée dans le terminal de communication, par exemple au moment d'un premier achat de l'utilisateur auprès de ce marchand, ou encore au moment de l'adhésion de l'utilisateur à un programme de fidélité proposé par ce marchand, à partir du terminal de communication.

Ainsi, lorsqu'un site marchand requiert auprès, d'un serveur de traitement de transactions, la création d'une transaction liée à la validation d'un panier d'achat par un utilisateur, il transmet, au serveur de traitement de transactions, son identifiant de marchand (retld). Le serveur de traitement de transactions instancie alors un terminal de paiement virtuel (VPOI) apte à communiquer avec le terminal de communication, et plus particulièrement avec l'applet de traitement de la transaction du module de sécurisation (SE) aux moyens d'APDU. Alternativement, le site marchand peut également réaliser seul l'instanciation du terminal de paiement virtuel et requérir l'établissement d'une session sécurisée avec le terminal de communication.

Quoi qu'il en soit, l'identifiant de marchand (retld) est ainsi transmis à l'applet de traitement de la transaction, qui interroge l'applet complémentaire afin de déterminer si l'utilisateur dispose d'un compte client auprès de ce marchand. L'applet complémentaire se charge donc de vérifier - au moyen d'une structure de données hébergées en son sein ou ailleurs dans le terminal de communication - si une entrée correspondant à cet identifiant de marchand (retld) existe (l'utilisateur a déjà effectué des transactions auprès de ce marchand) et, le cas échéant, récupère l'identifiant de l'utilisateur auprès de ce marchand (usrld).

Cet identifiant d'utilisateur (usrld) est communiqué en retour à l'applet de traitement de la transaction, qui le transmet à son tour au marchand. Ce dernier peut alors consulter ses propres structures de données pour évaluer la situation de l'utilisateur associé, et les éventuels avantages auxquels il peut prétendre (créditer des points sur un programme de fidélité, bénéficier d'une réduction immédiate ou sur un prochain achat, etc.). Dans le cas où une réduction immédiate est proposée - octroyée par exemple au titre de la fidélité du client - le site marchand communique le nouveau montant (montant après réduction) au serveur de traitement de transactions qui le relaie à l'utilisateur via le terminal de paiement virtuel (VPOI). La réduction peut ainsi être immédiatement répercutée à l'utilisateur.

Selon la technique proposée, l'applet complémentaire est donc en charge de seconder au moins une applet de traitement de transactions, afin de lui fournir, à sa demande et au moment opportun, des données complémentaires ou bien nécessaires pour la poursuite de la transaction (par exemple des données biométriques), ou bien utiles pour enrichir la transaction (par exemple des données relatives à un programme de fidélité). Ces données peuvent être stockées au sein même de l'applet complémentaire, mais également ailleurs au sein du terminal de communication, notamment hors du module de sécurisation (SE), dans l'environnement d'exécution courant (REE) ou sécurisé (TEE) (l'applet complémentaire dispose alors de moyens de communication avec des applications exécutées au sein de ces environnements d'exécution). Dans un mode de réalisation particulier de la technique proposée, une même applet complémentaire peut être utilisée pour fournir des données complémentaires à l'ensemble des différentes applications de traitement de transactions susceptibles d'être exécutées au sein du terminal de communication. L'applet complémentaire intègre alors un mécanisme de gestion des autorisations, lui permettant de savoir si une applet de traitement de transaction a effectivement le droit d'accéder à une donnée demandée (par exemple sur la base d'un identifiant (AID) de l'applet demandeuse). Alternativement, plusieurs applets complémentaires peuvent être exécutées au sein d'un même module de sécurisation, chacune étant dédiée à seconder une ou plusieurs autres applets de traitement de transactions bien identifiées.

### 5.2 Procédé associé

On décrit, en relation avec la **figure 2** et dans un mode de réalisation particulier de la technique proposée, un procédé de communication entre une première application de traitement de transactions et une deuxième application de traitement de données sécurisées, lesdites applications étant toute deux exécutées au sein d'un même module de sécurisation d'un terminal de communication. Un tel procédé est caractérisé en ce qu'il comprend :
- une étape de réception (21), par ladite première application, d'une requête en provenance d'un réseau de communication ;
- une étape de transmission (22), par ladite première application, d'une requête d'obtention d'une donnée sécurisée, à destination de ladite deuxième application ;
- une étape de vérification (23), par ladite deuxième application, que ladite première application est bien autorisée à accéder à ladite donnée requise ;
puis, lorsque ladite vérification s'avère positive :
- une étape d'obtention (24), par la deuxième application, de ladite donnée requise par la première application ;
- une étape de transmission (25), par ladite deuxième application, de ladite donnée requise, à destination de ladite première application ;
- une étape de transmission (26), par ladite première application, de ladite donnée requise à destination dudit réseau de communication.

L'étape de vérification (23), par la deuxième application, que la première application est bien autorisée à accéder à ladite donnée requise peut être réalisée en confrontant un identifiant (AID) de la première application (transmis par exemple dans la requête d'obtention de la donnée sécurisée) avec une liste d'identifiant d'applications effectivement autorisées à accéder à ladite donnée (liste d'identifiants qui est stockée au sein de ladite deuxième application).

Comme déjà présenté dans les cas d'utilisation exposés précédemment, la donnée requise par la première application peut être stockée au sein d'un espace de stockage - de préférence sécurisé - de la deuxième application. Alternativement, elle peut être disponible au sein d'un environnement d'exécution du terminal de communication autre que le module de sécurisation (par exemple au sein de l'environnement d'exécution courant (REE) ou sécurisé (TEE) du terminal de communication). Dans ce dernier cas, la deuxième application est apte à émettre à son tour, à destination d'applications tierces exécutées au sein de l'environnement d'exécution idoine, une requête d'obtention de la donnée requise par la première application. La donnée ainsi récupérée peut alors être par exemple temporairement stockée au sein de l'espace de stockage de la deuxième application, avant d'être relayée vers la première application. Dans ce cas, la deuxième application peut alors contenir une liste d'identifiants d'applications autorisées à enregistrer des données au sein de son espace de stockage.

### 5.3 Dispositif

On décrit, en relation avec la **figure 3**, un module de sécurisation d'un terminal de communication comprenant des moyens permettant l'exécution du procédé décrit préalablement.

Par exemple, le module de sécurisation comprend une mémoire 31 constituée d'une mémoire tampon, une unité de traitement 32, équipée par exemple d'un microprocesseur, et pilotée par le programme d'ordinateur 33, mettant en œuvre nécessaires à la mise en œuvre des fonctions de vérification.

À l'initialisation, les instructions de code du programme d'ordinateur 33 sont par exemple chargées dans une mémoire avant d'être exécutées par le processeur de l'unité de traitement 32. L'unité de traitement 32 reçoit en entrée (I) par exemple une requête de demande de traitement d'une transaction, en provenance d'un réseau de communication. Le microprocesseur de l'unité de traitement 32 met en œuvre les étapes du procédé de communication entre une première application de traitement de transactions et une deuxième application de traitement de données sécurisées, selon les instructions du programme d'ordinateur 33 pour permettre l'obtention d'une donnée sécurisée contribuant au traitement de la transaction, et notifier en sortie (T) le résultat de ce traitement.

Pour cela, le module de sécurisation comprend, outre la mémoire tampon 31, des moyens d'interface avec un réseau de communication, et des moyens d'interface avec d'autres environnements d'exécution présents au sein du terminal de communication. Le module de sécurisation comprend également des moyens de traitement cryptographiques ; ces moyens de traitement comprennent par exemple un processeur de chiffrement dédié et des clés de chiffrement, comme des clés de session dérivée d'une clé initiale.

Ces moyens peuvent être pilotés par le processeur de l'unité de traitement 32 en fonction du programme d'ordinateur 33.

## Revendications

1. Module de sécurisation (SE) intégré au sein d'un terminal de communication mobile (11), module **caractérisé en ce qu'**il comprend
au moins une première application (12) de traitement de transaction comprenant au moins une interface de communication avec un réseau de communication de manière sécurisée, et
au moins une deuxième application (13) de traitement de données sécurisées comprenant au moins un espace de stockage sécurisé et au moins une interface de communication avec un environnement d'exécution dudit terminal de communication,
ladite première application (12) étant en mesure de requérir au moins une donnée auprès de ladite deuxième application (13) et de transmettre ladite donnée requise à destination dudit réseau de communication,
ladite deuxième application comprenant en outre :
- au moins une liste d'identifiants d'applications autorisées à accéder à ladite au moins une donnée, et des moyens de vérification qu'un identifiant de la première application est présent dans ladite liste d'identifiants d'applications autorisées à accéder à ladite donnée ;
- des moyens de transmission,en cas de vérification positive et si la donnée est disponible au sein d'un environnement d'exécution du terminal de communication autre que le module de sécurisation, par ladite deuxième application, d'une requête d'obtention de ladite donnée à destination d'une application tierce exécutée au sein d'un environnement d'exécution autre que le module de sécurisation dudit terminal de communication ; f
- des moyens de réception, par ladite deuxième application, de ladite donnée ;
- des moyens de vérification, par la deuxième application, que ladite application tierce est bien autorisée à requérir la mémorisation de données au sein d'au moins un espace de stockage sécurisé de ladite deuxième application, ladite étape de vérification comprenant la vérification qu'un identifiant de ladite application tierce est présent dans une liste d'identifiants d'applications autorisées à requérir la mémorisation de données au sein dudit au moins un espace de stockage sécurisé, ladite liste étant comprise au sein de la deuxième application ; f
- des moyens d'enregistrement, en cas de vérification positive, par la deuxième application, de ladite donnée requise au sein dudit au moins un espace de stockage;
- des moyens de transmission de ladite donnée requise, à destination de ladite première application.

2. Module de sécurisation selon la revendication 1, **caractérisé en ce que** ladite au moins une donnée appartient au groupe comprenant :
- une donnée représentative d'une carte de paiement ;
- une donnée représentative d'une association entre un identifiant de marchand d'une part, et un identifiant d'un utilisateur auprès dudit marchand d'autre part;
- une donnée d'identification ou d'authentification biométrique.

3. Procédé de communication entre une première application de traitement de transactions et une deuxième application de traitement de données sécurisées, lesdites applications étant exécutées au sein d'un module de sécurisation d'un terminal de communication selon la revendication 1, procédé **caractérisé en ce qu'**il comprend :
- une étape de réception, par ladite première application, d'une requête en provenance d'un réseau de communication ;
- une étape de transmission, par ladite première application, d'une requête d'obtention d'une donnée sécurisée, à destination de ladite deuxième application ;
- une étape de vérification, par ladite deuxième application, que ladite première application est bien autorisée à accéder à ladite donnée requise, ladite étape de vérification comprenant la vérification qu'un identifiant de la première application est présent dans une liste d'identifiants d'applications autorisées à accéder à ladite donnée, ladite liste étant comprise au sein de la deuxième application ;
- en cas de vérification positive et si la donnée est disponible au sein d'un environnement d'exécution du terminal de communication autre que le module de sécurisation:
- une étape de transmission, par ladite deuxième application, d'une requête d'obtention de ladite donnée à destination d'une application tierce exécutée au sein d'un environnement d'exécution autre que le module de sécurisation dudit terminal de communication ;
- une étape de réception, par ladite deuxième application, de ladite donnée ;
- une étape de vérification, par la deuxième application, que ladite application tierce est bien autorisée à requérir la mémorisation de données au sein d'au moins un espace de stockage sécurisé de ladite deuxième application, ladite étape de vérification comprenant la vérification qu'un identifiant de ladite application tierce est présent dans une liste d'identifiants d'applications autorisées à requérir la mémorisation de données au sein dudit au moins un espace de stockage sécurisé, ladite liste étant comprise au sein de la deuxième application ;
- en cas de vérification positive :
- une étape d'enregistrement, par la deuxième application, de ladite donnée requise au sein dudit au moins un espace de stockage ;
- une étape de transmission, par ladite deuxième application, de ladite donnée requise, à destination de ladite première application ;
- une étape de transmission, par ladite première application, de ladite donnée requise à destination dudit réseau de communication.

4. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution d'un procédé de communication selon la revendication 3, lorsqu'il est exécuté sur un ordinateur.

## Patentansprüche

1. Sicherungsmodul (SE), das in einem mobilen Kommunikationsendgerät (11) integriert ist, Modul, das **dadurch gekennzeichnet, dass** es aufweist
mindestens eine erste Anwendung (12) zur Transaktionsverarbeitung, umfassend mindestens eine Schnittstelle zur Kommunikation mit einem Kommunikationsnetz auf sichere Weise und
mindestens eine zweiten Anwendung (13) zur Verarbeitung von gesicherten Daten, umfassend mindestens einen gesicherten Speicherplatz und mindestens eine Schnittstelle zur Kommunikation mit einer Ausführungsumgebung des Kommunikationsendgeräts, wobei die erste Anwendung (12) in der Lage ist, mindestens eine Dateneinheit bei der zweiten Anwendung (13) anzufordern und die angeforderte Dateneinheit an das Kommunikationsnetz zu übertragen,
wobei die zweite Anwendung ferner aufweist:
- mindestens eine Liste von Anwendungskennungen, die berechtigt sind, auf die mindestens eine Dateneinheit zuzugreifen, und Mittel zum Überprüfen, dass eine Kennung der ersten Anwendung in der Liste von Anwendungskennungen, die berechtigt sind, auf die Dateneinheit zuzugreifen, vorhanden ist,
- Mittel zum Übertragen, bei positivem Ergebnis der Überprüfung und wenn die Dateneinheit innerhalb einer anderen Ausführungsumgebung des Kommunikationsendgeräts als dem Sicherungsmodul verfügbar ist, durch die zweite Anwendung einer Anfrage zum Erhalten der Dateneinheit an eine Drittanwendung, die innerhalb einer anderen Ausführungsumgebung als dem Sicherheitsmodul des Kommunikationsendgeräts ausgeführt wird,
- Mittel zum Empfangen der Dateneinheit durch die zweite Anwendung,
- Mittel zum Überprüfen durch die zweite Anwendung, dass die Drittanwendung sehr wohl berechtigt ist, das Speichern von Daten in mindestens einem gesicherten Speicherplatz der zweiten Anwendung anzufordern, wobei der Schritt des Überprüfens das Überprüfen aufweist, dass eine Kennung der Drittanwendung in einer Liste von Anwendungskennungen vorhanden ist, die berechtigt sind, das Speichern von Daten in mindestens einem gesicherten Speicherplatz anzufordern, wobei die Liste in der zweiten Anwendung enthalten ist,
- Mittel zum Speichern der angeforderten Dateneinheit in mindestens einem gesicherten Speicherplatz durch die zweite Anwendung bei positivem Ergebnis der Überprüfung,
- Mittel zum Übertragen der angeforderten Dateneinheit an die erste Anwendung.

2. Sicherungsmodul nach Anspruch 1, **dadurch gekennzeichnet, dass** die mindestens eine Dateneinheit zu der Gruppe gehört, umfassend:
- eine Dateneinheit, die für eine Zahlungskarte repräsentativ ist,
- eine Dateneinheit, die für eine Verbindung zwischen einerseits einer Händlerkennung und andererseits einer Kennung eines Benutzers bei dem Händler repräsentativ ist,
- eine Dateneinheit zur Identifizierung oder zur biometrischen Authentifizierung.

3. Verfahren zur Kommunikation zwischen einer ersten Anwendung zur Verarbeitung von Transaktionen und einer zweiten Anwendung zur Verarbeitung von gesicherten Daten, wobei die Anwendungen in einem Sicherungsmodul eines Kommunikationsendgeräts nach Anspruch 1 ausgeführt werden, Verfahren, **dadurch gekennzeichnet, dass** es aufweist:
- einen Schritt des Empfangens einer Anfrage von einem Kommunikationsnetz durch die erste Anwendung,
- einen Schritt des Übertragens durch die erste Anwendung einer Anfrage zum Erhalten einer gesicherten Dateneinheit an die zweite Anwendung,
- einen Schritt des Überprüfens durch die zweite Anwendung, dass die erste Anwendung sehr wohl berechtigt ist, auf die angeforderte Dateneinheit zuzugreifen, wobei der Schritt des Überprüfens das Überprüfen aufweist, dass eine Kennung der ersten Anwendung in einer Liste von Anwendungskennungen vorhanden ist, die berechtigt sind, auf die Dateneinheit zuzugreifen, wobei die Liste in der zweiten Anwendung enthalten ist,
- bei positivem Ergebnis der Überprüfung und wenn die Dateneinheit innerhalb einer anderen Ausführungsumgebung des Kommunikationsendgeräts als dem Sicherungsmodul verfügbar ist:
- einen Schritt des Übertragens durch die zweite Anwendung einer Anfrage zum Erhalten der Dateneinheit an eine Drittanwendung, die innerhalb einer anderen Ausführungsumgebung als dem Sicherheitsmodul des Kommunikationsendgeräts ausgeführt wird,
- einen Schritt des Empfangens der Dateneinheit durch die zweite Anwendung,
- einen Schritt des Überprüfens durch die zweite Anwendung, dass die Drittanwendung sehr wohl berechtigt ist, das Speichern von Daten in mindestens einem gesicherten Speicherplatz der zweiten Anwendung anzufordern, wobei der Schritt des Überprüfens das Überprüfen aufweist, dass eine Kennung der Drittanwendung in einer Liste von Anwendungskennungen vorhanden ist, die berechtigt sind, das Speichern von Daten in mindestens einem gesicherten Speicherplatz anzufordern, wobei die Liste in der zweiten Anwendung enthalten ist,
- bei positivem Ergebnis der Überprüfung:
- einen Schritt des Speicherns der angeforderten Dateneinheit in mindestens einem gesicherten Speicherplatz durch die zweite Anwendung,
- einen Schritt des Übermittelns der angeforderten Dateneinheit an die erste Anwendung durch die zweite Anwendung,
- einen Schritt des Übermittelns der angeforderten Dateneinheit an das Kommunikationsnetz durch die erste Anwendung.

4. Computerprogrammprodukt, das von einem Kommunikationsnetz herunterladbar ist und/oder auf einem computerlesbaren Aufzeichnungsmedium gespeichert ist und/oder von einem Mikroprozessor ausführbar ist, **dadurch gekennzeichnet, dass** es Programmcodeanweisungen zum Ausführen eines Verfahrens zur Kommunikation nach Anspruch 3 aufweist, wenn es auf einem Computer ausgeführt wird.

## Claims

1. Secure element (SE) integrated within a mobile communications terminal (11), the element being **characterized in that** it comprises:
at least one first application (12) for processing transactions, comprising at least one interface for communications with a communications network in a secured manner, and
at least one second application (13) for processing secured data, comprising at least one secured storage space and at least one communications interface for communications with an executing environment of said communications terminal,
said first application (12) being able to request at least one piece of data from said second application (13) and transmit said piece of requested data to said communications network,
said second application further comprising:
- at least one list of identifiers of applications authorized to access said at least one piece of data, and means for verifying that an identifier of the first application is present within said list of identifiers of applications authorized to access said piece of data;
- means for transmitting, in case of positive verification and when the piece of data is available within an execution environment of the communications terminal other than the secure element, by said second application, of a request for obtaining said piece of data addressed to a third application executed within an execution environment other than the secure element of said communications terminal;
- means for receiving, by said second application, said piece of data;
- means for verifying, by said second application, that said third application is truly authorized to request the storage of data within at least one secured storage space of said second application, said verifying comprising verifying that an identifier of the third application is present within a list of identifiers of applications authorized to request the storage of data within said at least one secured storage space, said list being comprised within said second application;
- means for storing, in case of positive verification, by said second application, said piece of requested data within said at least one secured storage space;
- means for transmitting said piece of requested data to said first application.

2. Secure element according to claim 1, **characterized in that** said at least one piece of data belongs to the group comprising:
- a piece of data representing a payment card;
- a piece of data representing an association between a merchant identifier on the one hand and an identifier of the user with said merchant on the other hand;
- a piece of biometric identification or authentication data.

3. Method of communications between a first application for processing transactions and a second application for processing secured data, said applications being executed within the secure element of a communications terminal according to claim 1, the method being **characterized in that** it comprises:
- a step of reception, by said first application, of a request coming from a communications network;
- a step of transmission, by said first application, of a request for obtaining a piece of secured data, addressed to said second application;
- a step of verification, by said second application, that said first application is truly authorized to access said piece of requested data, said step of verification comprising verifying that an identifier of the first application is present within a list of identifiers of applications authorized to access said piece of data, said list being comprised within said second application;
- in case of positive verification and when the piece of data is available within an execution environment of the communications terminal other than the secure element:
- a step of transmission, by said second application, of a request for obtaining said piece of data addressed to a third application executed within an execution environment other than the secure element of said communications terminal;
- a step od reception, by said second application, of said piece of data;
- a step of verification, by said second application, that said third application is truly authorized to request the storage of data within at least one secured storage space of said second application, said step of verification comprising verifying that an identifier of said third application is present within a list of identifiers of applications authorized to request the storage of data within said at least one secured storage space, said list being comprised within said second application;
- in case of positive verification:
- a step for storing, by said second application, said piece of requested data within said at least one secured storage space
- a step of transmission, by said second application, of said piece of requested data, to said first application;
- a step of transmission, by said first application, of said piece of requested data, to said communications network.

4. Computer program product downloadable from a communications network and/or stored on a carrier readable by a computer and/or executable by a microprocessor, **characterized in that** it comprises program code instructions for executing a method of communications according claim 3, when it is executed on a computer.
